# EUROPÄISCHE PATENTSCHRIFT

(11) **EP 0 806 325 B1**
(45) Veröffentlichungstag und Bekanntmachung des Hinweises auf die Patenterteilung: **11.04.2001**
(21) Anmeldenummer: 97107462.0
(22) Anmeldetag: 06.05.1997
(51) Int. Cl.: B60R 22/18, B60R 22/22, B60R 22/26

(54) **Gurtstraffer**
Belt tensioner
Tendeur de ceinture

(30) Priorität: 06.05.1996 DE 29608213 U
(43) Veröffentlichungstag der Anmeldung: 12.11.1997
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- EP-A- 0 803 412
- DE-A- 3 829 975
- DE-U- 29 607 362
- FR-A- 2 104 446
- US-A- 5 037 132

## Beschreibung

Die Erfindung betrifft einen Gurtstraffer für einen Sicherheitsgurt, mit einer Kolben-Zylinder-Einheit, wobei das Rohr der Kolben-Zylinder-Einheit im Bereich seines Befestigungsendes am Fahrzeug oder am Fahrzeugsitz angebracht wird. Ein derartiger gattungsgemäßer Gurtstraffer ist aus dem Stand der Technik bekannt.

Bislang werden Gurtstraffer an einem Fahrzeug oder einem Fahrzeugsitz üblicherweise durch Schraubverbindungen befestigt, wobei sich eine Schraube durch eine an der Wandung eines Rohres angeschweißte Lasche erstreckt. Darüber hinaus gibt es auch Gurtstraffer, bei denen ein am Rohr befestigtes Zusatzelement, wie z.B. ein Seilumlenker, mit Flanschen versehen ist, durch die der Gurtstraffer am Fahrzeug oder am Fahrzeugsitz aufgrund des ebenen Flansches in mindestens einer Ebene lagefest befestigt werden kann. Das Vorsehen von an einem Rohr oder an einem Zusatzelement angeschweißten Laschen oder Flanschen zur Befestigung des Gurtstraffers verteuert jedoch seine Herstellung.

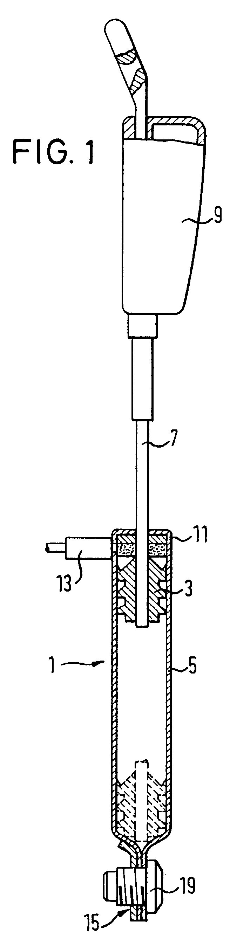

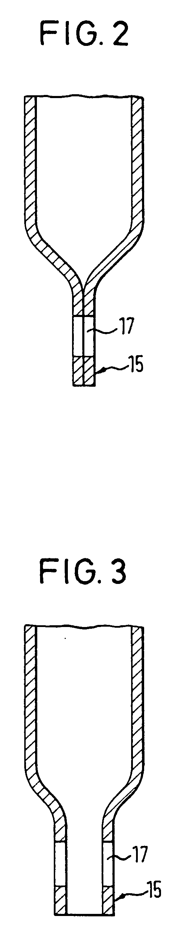

Aus der nicht Vor- veröffentlichten EP 0 803 412 A1 ist ein Gurtstraffer bekannt, bei dem das Rohr der Kolben-Zylinder-Einheit im Bereich des Befestigungsendes abgeflacht ist und einen Befestigungsflansch bildet, wie in den Figuren 1 und 2 dargestellt.

Die Erfindung schafft einen einfach aufgebauten Gurtstraffer mit einem kostengünstigen Befestigungsende, das so ausgebildet ist, daß es eine größere Befestigungssicherheit und eine stabilere Lage des Rohres bietet als bislang bekannte.

Dies wird bei einem Gurtstraffer der eingangs genannten Art einerseits dadurch erreicht, daß das Rohr im Bereich seines Befestigungsendes abgeflachte Wandungsabschnitte hat, die einen Befestigungsflansch bilden, an dem ein Befestigungsmittel zur Anbringung des Gurtstraffers am Fahrzeug oder am Fahrzeugsitz angreifen kann, und daß das Befestigungsende einen von der Stirnseite des Befestigungsendes ausgehenden Längsspalt aufweist, der das Befestigungsende in zwei Abschnitte, die zur Befestigung des Gurtstraffers dienen, teilt. Zusätzliche an der Wandung des Rohres anzubringende Teile werden dadurch vermieden, ohne daß Festigkeitsprobleme auftreten. Durch die beiden Abschnitte am Befestigungsende ergibt sich eine breitere Basis für die Befestigung des Rohres, welches somit besser gesichert ist.

Gemäß einer Ausführungsform ist das Rohr im Bereich seines Befestigungsendes zu einem zweilagigen, plattenförmigen Befestigungsflansch flachgepreßt.

Die Aufgabe wird darüber hinaus bei einem Gurtstraffer der eingangs genannten Art dadurch gelöst, daß das Rohr im Bereich seines Befestigungsendes abgeflachte Wandungsabschnitte hat, die einen Befestigungsflansch bilden, an dem ein Befestigungsmittel zur Anbringung des Gurtstraffers am Fahrzeug oder am Fahrzeugsitz angreifen kann, und daß die Wandungsabschnitte im Bereich des abgeflachten Befestigungsendes voneinander beabstandet sind. Durch die Beabstandung der abgeflachten Wandungsabschnitte ist das Rohr gegen Kippen rechtwinklig zur Ebene der Abflachung stabil gesichert.

Durch zumindest eine Öffnung am Befestigungsende kann der Gurtstraffer am Fahrzeug oder am Fahrzeugsitz befestigt sein, indem sich das Befestigungsmittel durch die Öffnung erstreckt.

Bei einer weiteren vorteilhaften Ausgestaltung ist vorgesehen, daß das Rohr quer zu seiner Längsrichtung zumindest teilweise gekrümmt ist. Das Rohr kann damit den räumlichen Gegebenheiten im Fahrzeug besser angepaßt werden, indem das Befestigungsende z.B. an schwer zugänglichen Stellen am Fahrzeug oder am Fahrzeugsitz arretiert und durch Biegung des Befestigungsendes oder zusätzlich auch des übrigen Rohrabschnitts das gurtschloßseitige Ende auf die optimale Lage eines mit dem Kolben verbundenen Gurtschlosses ausgerichtet wird.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Längsschnittansicht durch einen Gurtstraffer mit einem daran anschließenden Gurtschloß,
Fig. 2 eine vergrößerte Detailansicht des Befestigungsendes des in Fig. 1 gezeigten Rohres als Teil des Gurtstraffers,
Fig. 3 eine Längsschnittansicht durch das Befestigungsende des Rohres des erfindungsgemäßen Gurtstraffers gemäß einer ersten Ausführungsform,
Fig. 4 eine Seitenansicht eines mit einem Längsspalt versehenen Befestigungsendes des erfindungsgemäßen Gurtstraffers gemäß einer zweiten Ausführungsform,
Fig. 5 ein der in Fig. 4 gezeigten Ausführungsform weitgehend entsprechendes Befestigungsende, bei dem die durch den Längsspalt entstandenen Abschnitte seitlich auseinandergebogen sind, und
Fig. 6 eine Vorderansicht eines Fahrzeugsitzes mit einem erfindungsgemäßen Gurtstraffer, dessen Rohr gekrümmt ist.

In Fig. 1 ist ein Gurtstraffer 1 gezeigt, der eine Kolben-Zylinder-Einheit umfaßt, die aus einem Kolben 3 und einem Rohr 5 besteht. Am Kolben 3 ist ein Zugseil 7 befestigt, welches den Kolben 3 mit einem Gurtschloß 9 verbindet. Am gurtschloßseitigen Ende 11 des Rohres 5 ist im Rohrinneren eine Kammer mit einem pyrotechnischen Treibsatz zum Antrieb des Kolbens 3 vorgesehen, der über einen Zünder 13 auslösbar ist. Das dem gurtschloßseitigen Ende 11 gegenüberliegende Ende des Rohres 5 wird als sein Befestigungsende 15 bezeichnet.

Das Rohr 5 ist am Befestigungsende 15 zu einem zweilagigen, plattenförmigen Befestigungsflansch flachgepreßt, wie in Fig. 2 deutlicher zu erkennen ist. Durch eine Öffnung 17 im Befestigungsende 15 kann eine Schraube 19 gesteckt werden, mittels der der Gurtstraffer 1 samt Gurtschloß 9 an einem Fahrzeug oder einem Fahrzeugsitz festgeschraubt wird.

Die in Fig. 3 gezeigte erfindungsgemäße Ausführungsform des Gurtstraffers 1 unterscheidet sich von der in den Fign. 1 und 2 gezeigten Ausführungsform nur dadurch, daß die Wandungsabschnitte des Rohres 5 am Befestigungaende 15 nicht zu einem zweilagigen, plattenförmigen Befestigungsflansch zusammengepreßt sind, sondern daß nur Wandungsabschnitte des Rohres flachgepreßt sind, ohne daß sich diese entstandenen parallelen Wandungsabschnitte gegenseitig berühren. Das Befestigungsende 15 kann stirnseitig geschlossen oder, wie in Fig. 3 gezeigt, offen sein, so daß sich eine Art Ausströmöffnung bildet. Auch bei der Ausführungsform nach Fig. 3 weist das Befestigungsende 15 eine Öffnung 17 auf, über die der Gurtstraffer 1 z.B. an den Rahmen eines Fahrzeugsitzes geschraubt werden kann.

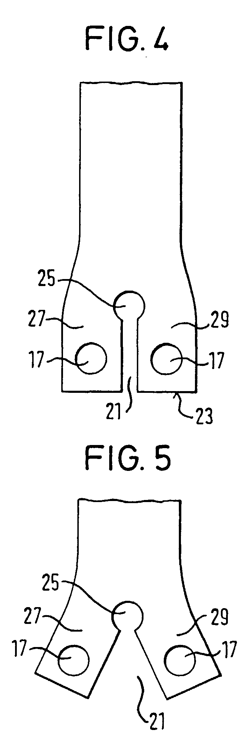

Während die in den Fign. 1 und 2 gezeigten Gurtstraffer 1 mittels einer Schraube oder eines Bolzens und dadurch schwenkbar am Fahrzeug oder am Fahrzeugsitz befestigt werden können, weist das Befestigungsende 15 der in den Fign. 4 und 5 gezeigten erfindungsgemäßen Ausführungsformen des Gurtstraffers 1 zwei Öffnungen 17 auf. Das Befestigungsende 15 ist bei beiden Ausführungsformen mit einem Längsspalt 21 versehen, der von der Stirnseite 23 des Befestigungsendes 15 ausgeht und in einer Bohrung 25 endet. Der Längsspalt 21 teilt das Befestigungsende in zwei Abschnitte 27 und 29, mit jeweils einer Öffnung 17, wobei die Abschnitte 27, 29 in der in Fig. 5 gezeigten Ausführungsform in der Ebene der Abflachung auseinandergebogen sind, so daß die Öffnungen 17 einen größeren Abstand voneinander aufweisen als bei der in Fig. 4 gezeigten Ausführungsform.

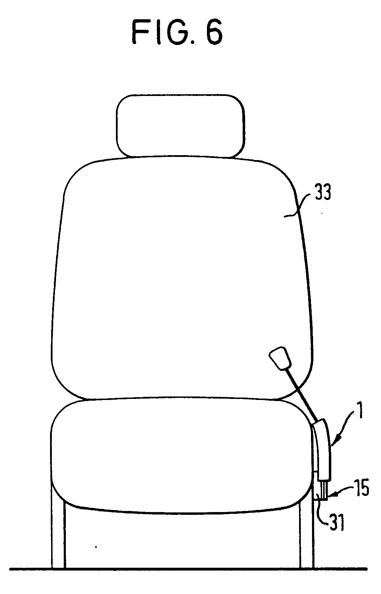

Der in Fig. 6 gezeigte Gurtstraffer 1 ist an einem Rahmenteil 31 eines Fahrzeugsitzes 33 mittels einer Schraube, die sich durch die Öffnung 17 im Befestigungsende 15 erstreckt, schwenkbar angebracht. Um im Rückhaltefall eine möglichst lineare Krafteinleitung vom Sicherheitsgurt in das Gurtschloß 9 zu erreichen, ist das Rohr 5 quer zu seiner Längsrichtung gekrümmt, so daß das Gurtschloß 9 optimal plazierbar ist, obwohl das Befestigungsende 15 an einem schwer zugänglichen Ort am Fahrzeugsitz 33 angeschraubt ist, der bei bislang bekannten Gurtstraffern mit stets zylindrischen Rohren nicht für eine Gurtstrafferbefestigung geeignet gewesen wäre. Je nach Anordnung des Gurtstraffers 1 kann nur ein Teil des Rohres 5 in Längsrichtung gekrümmt sein, z.B. lediglich das Befestigungsende 15 oder der restliche, rohrförmige, unverformte Abschnitt, oder das Rohr 5 kann entsprechend Fig. 6 auf seiner Gesamtlänge gekrümmt sein.

Da die Wandung des Rohres 5 einstückig in das Befestigungsende 15 übergeht, ergibt sich im Rückhaltefall eine optimale Kraftweiterleitung zum Befestigungsmittel. Es entfallen damit zusätzliche für die Herstellung des Gurtstraffers bislang notwendige Einzelteile wie an die Wandung des Zylinders angeschweißte Befestigungslaschen.

## Patentansprüche

1. Gurtstraffer (1) für einen Sicherheitsgurt, mit einer Kolben-Zylinder-Einheit, wobei das Rohr (5) der Kolben-Zylinder-Einheit im Bereich seines Befestigungsendes (15) am Fahrzeug oder am Fahrzeugsitz (33) angebracht wird, dadurch gekennzeichnet, daß das Rohr im Bereich seines Befestigungsendes (15) abgeflachte Wandungsabschnitte hat, die einen Befestigungsflansch bilden, an dem ein Befestigungsmittel zur Anbringung des Gurtstraffers (1) am Fahrzeug oder am Fahrzeugsitz (33) angreifen kann, und daß das Befestigungsende (15) einen von der Stirnseite (23) des Befestigungsendes (15) ausgehenden Längsspalt (21) aufweist, der das Befestigungsende (15) in zwei Abschnitte (27, 29), die zur Befestigung des Gurtstraffers (1) dienen, teilt.

2. Gurtstraffer (1) nach Anspruch 1, dadurch gekennzeichnet, daß die beiden Abschnitte (27, 29) in der Ebene der Abflachung seitlich auseinandergebogen sind.

3. Gurtstraffer (1) nach einem der vorhergehenden Ansprüche, dadurch gekennzeichnet, daß das Befestigungsende (15) des Rohres (5) zu einem zweilagigen, plattenförmigen Befestigungsflansch flachgepreßt ist.

4. Gurtstraffer (1) für einen Sicherheitsgurt, mit einer Kolben-Zylinder-Einheit, wobei das Rohr (5) der Kolben-Zylinder-Einheit im Bereich seines Befestigungsendes (15) am Fahrzeug oder am Fahrzeugsitz (33) angebracht wird, dadurch gekennzeichnet, daß das Rohr im Bereich seines Befestigungsendes (15) abgeflachte Wandungsabschnitte hat, die einen Befestigungsflansch bilden, an dem ein Befestigungsmittel zur Anbringung des Gurtstraffers (1) am Fahrzeug oder am Fahrzeugsitz (33) angreifen kann, und daß die Wandungsabschnitte im Bereich des abgeflachten Befestigungsendes voneinander beabstandet sind.

5. Gurtstraffer (1) nach Anspruch 1, 2 oder 4, dadurch gekennzeichnet, daß Wandungsabschnitte des Rohres (5) im Bereich des Befestigungsendes (15) flachgepreßt sind.

6. Gurtstraffer (1) nach einem der vorstehenden Ansprüche, dadurch gekennzeichnet, daß das Befestigungsende (15) zumindest eine Öffnung (17) aufweist, durch die sich in montiertem Zustand des Gurtstraffers (1) das Befestigungsmittel erstreckt.

7. Gurtstraffer (1) nach einem der vorstehenden Ansprüche, dadurch gekennzeichnet, daß das Rohr (5) quer zu seiner Längsrichtung zumindest teilweise gekrümmt ist.

## Claims

1. A belt tensioner (1) for a seat belt, including a piston/cylinder unit, the tube (5) of the piston/cylinder unit being attached in the region of its fastening end (15) to the vehicle or to the vehicle seat (33), characterized in that in the region of its fastening end (15) the tube has flattened wall sections which form a fastening flange which is engageable by a fastening means for attaching said belt tensioner (1) to the vehicle or to the vehicle seat (33), and that said fastening end (15) includes a longitudinal gap (21) extending from the end face (23) of said fastening end (15) and dividing said fastening end (15) into two sections (27, 29) serving to secure said belt tensioner (1).

2. The belt tensioner (1) as set forth in claim 1, characterized in that both sections (27, 29) are laterally bent apart in the plane of the flat portion.

3. The belt tensioner (1) as set forth in either of the preceding claims, characterized in that said fastening end (15) of said tube (5) is pressed flat to form a two-layer, plate-shaped fastening flange.

4. A belt tensioner (1) for a seat belt, including a piston/cylinder unit, the tube (5) of the piston/cylinder unit being attached in the region of its fastening end (15) to the vehicle or to the vehicle seat (33), characterized in that in the region of its fastening end (15) the tube has flattened wall sections which form a fastening flange which is engageable by a fastening means for attaching said belt tensioner (1) to the vehicle or to the vehicle seat (33), and that the wall sections are spaced from each other in the region of the flattened fastening end.

5. The belt tensioner (1) as set forth in claim 1, 2 or 4, characterized in that wall sections of said tube (5) are pressed flat in the region of said fastening end (15).

6. The belt tensioner (1) as set forth in any of the preceding claims, characterized in that said fastening end (15) includes at least one opening (17) through which the fastening means extends in the fixed condition of said belt tensioner (1).

7. The belt tensioner (1) as set forth in any of the preceding claims, characterized in that said tube (5) is curved at least in part transversely to its longitudinal direction.

## Revendications

1. Raidisseur de ceinture (1) pour une ceinture de sécurité, avec un ensemble cylindre-piston, le tube (5) de l'ensemble cylindre-piston étant monté, dans la zone de son extrémité de fixation (15), sur le véhicule ou sur le siège de véhicule (33), caractérisé en ce que le tube possède, dans la zone de son extrémité de fixation (15), des tronçons de paroi aplatis qui forment une bride fixation sur laquelle on peut engager un moyen de fixation pour monter le raidisseur de ceinture (1) sur le véhicule ou sur le siège de véhicule (33), et en ce que l'extrémité de fixation (15) présente une fente longitudinale (21) qui part de la face frontale (23) de l'extrémité de fixation (15) et qui partage l'extrémité de fixation (15) en deux sections (27, 29) qui servent à la fixation du raidisseur de ceinture (1).

2. Raidisseur de ceinture (1) selon la revendication 1, caractérisé en ce que les deux sections (27, 29) sont coudées en s'écartant latéralement l'une de l'autre dans le plan de l'aplatissement.

3. Raidisseur de ceinture (1) selon l'une quelconque des revendications précédentes, caractérisé en ce que l'extrémité de fixation (15) du tube (5) est pressée à plat pour former une bride de fixation à deux couches, en forme de plaque.

4. Raidisseur de ceinture (1) pour une ceinture de sécurité, avec un ensemble cylindre-piston, le tube (5) de l'ensemble cylindre-piston étant monté, dans la zone de son extrémité de fixation (15), sur le véhicule ou sur le siège de véhicule (33), caractérisé en ce que le tube possède, dans la zone de son extrémité de fixation (15), des tronçons de paroi aplatis qui forment une bride fixation sur laquelle on peut engager un moyen de fixation pour monter le raidisseur de ceinture (1) sur le véhicule ou sur le siège de véhicule (33), et en ce que les tronçons de paroi sont écartés l'un de l'autre dans la zone d'extrémité aplatie.

5. Raidisseur de ceinture (1) selon la revendication 1, 2 ou 4, caractérisé en ce que des tronçons de paroi du tube (5) sont pressés à plat dans la zone de l'extrémité de fixation (15).

6. Raidisseur de ceinture (1) selon l'une quelconque des revendications précédentes, caractérisé en ce que l'extrémité de fixation (15) présente au moins une ouverture (17) à travers laquelle s'étend le moyen de fixation quand le raidisseur de ceinture (1) est à l'état monté.

7. Raidisseur de ceinture (1) selon l'une quelconque des revendications précédentes, caractérisé en ce que le tube (5) est recourbé au moins en partie perpendiculairement à son sens longitudinal.
